# EUROPEAN PATENT APPLICATION

(11) **EP 4 351 109 A1**
(43) Date of publication of application: **10.04.2024**
(21) Application number: 22199380.1
(22) Date of filing: 03.10.2022
(51) Int. Cl.: H04L 67/141, H04L 67/145, H04L 67/146, H04L 67/1027, H04L 67/14

(54) **ACCELERATED SESSION RESUMPTION ON LOAD-BALANCED NETWORK SERVICES**

(71) Applicant: Koninklijke Philips N.V., 5656 AG Eindhoven (NL)
(72) Inventor: BRANDSMA, Ewout, Eindhoven (NL); HUIJGEN, Hendrik, Eindhoven (NL)
(74) Representative: Philips Intellectual Property & Standards

(57) **Abstract**

The invention relates to a method and apparatus for increasing likelihood of a device being able to resume a previously established session (e.g., a transport layer security session) with a load-balanced network service (e.g., a cloud service) which may only support load balancing at node level. This can be achieved by maintaining one or more network addresses and valid session tickets (or identifiers) of individual nodes (e.g., servers) of the network service, that were used for previous communication sessions and by selecting a particular node for a subsequent communication session from a list of potential nodes returned by an address lookup (e.g., a domain name system (DNS) lookup), based on its match with one of the one or more network addresses and session tickets or identifiers.

## Description

### FIELD OF THE INVENTION

The invention relates to session resumption procedures for devices and/or applications in wired or wireless networks, such as - but not limited to - load-balanced cloud services.

### BACKGROUND OF THE INVENTION

Internet of Things (IoT) devices frequently use sleeping to reduce power consumption. This causes communication sessions with their network to be suspended. In many cases, these sessions use security protocols for privacy reasons - protocols such as TLS (transport layer security) and these sessions are also suspended.

To meet demand and reduce workload, organizations spread the workload over multiple servers, called "load balancing". Load balancing serves to evenly distribute network traffic to prevent failure caused by overloading a particular resource. This strategy improves performance and availability of applications, websites, databases, and other computing resources. It also helps process user requests quickly and accurately.

Load balancing is often found in use at server farms that run high-traffic websites. It is also used for domain name system (DNS) servers, databases, and file transfer protocol (FTP) sites. By routing user requests evenly across a group of servers, load balancers minimize the likelihood of downtime. They do this by rerouting traffic to other servers in the group if one should fail. When adding a new server to the server pool, a load balancer automatically includes it in the process of traffic distribution.

Thus, load balancing enables a service provider (e.g., a cloud service provider) to balance the load of requests over a multitude of physical servers (also known as nodes) offering scalability and availability.

When an IoT device wakes up, it must resume the sessions. A brute force solution would be to redo a full handshaking procedure to obtain all required information for restarting the session. This represents a considerable overhead for a message payload which is often very small.

### SUMMARY OF THE INVENTION

It is an object of the present invention to provide enhanced efficiency when initiating a communication session in connection with load balanced services.

This object is achieved by an apparatus as claimed in claim 1, by a communication module as claimed in claim 8, by a client device as claimed in claim 11, by a method as claimed in claim 13, and by a computer program product as claimed in claim 14.

According to a first aspect, an apparatus is provided for controlling initiation of a communication session between a client device and a network node, wherein the apparatus is adapted to:
maintain one or more network addresses and associated session tickets or session identifiers of individual network nodes that provide a target network service and that were used by the client device for previous communication sessions;
select a network node for a subsequent communication session from a list of potential nodes returned by an address lookup based on a match of its network address with one of the one or more network addresses and associated session tickets or identifiers; and
use the matched network address and associated session ticket or identifier for a session resumption with the selected network node.

According to a second aspect, a communication module comprising the apparatus of the first aspect is provided. Thereby, client devices can be upgraded or enhanced by adding or mounting the communication module of the second aspect.

According to a third aspect, a client device comprising the apparatus of the first aspect is provided.

According to a fourth aspect, a method of controlling initiation of a communication session between a client device and a network node is provided, wherein the method comprises:
maintaining one or more network addresses and associated session tickets or session identifiers of individual network nodes that provide a target network service and that were used for previous communication sessions;
selecting a network node for a subsequent communication session from a list of potential nodes returned by an address lookup based on a match of its network address with one of the one or more network addresses and associated session tickets or identifiers; and
using the matched network address and associated session ticket or identifier for a session resumption with the selected network node.

According to a fifth aspect, a computer program product is provided, which comprises code means for producing the steps of the above method according to the fourth aspect when run on a computer device.

Accordingly, previous connections (communication sessions) can be tracked by performing connection tracking at the client device side. The proposed enhanced client device is adapted, upon waking up from sleep, to perform an address lookup (e.g., DNS lookup) of a desired target network service (e.g., cloud service) to obtain a list of valid network addresses (e.g., IP addresses), to maintain at least one entry with a network address and a valid session ticket or identifier from (a) previous communication session(s), and to check if at least one of the network addresses of the address lookup matches with the maintained at least one network address. If a match is determined, a shortened (accelerated) handshake towards the matching network address can be initiated using the stored associated session ticket or identifier.

The proposed enhanced session resumption procedure enables a reduction of protocol overhead independent of server capabilities. Thereby, lower protocol overhead can be achieved in terms of the number of message flights and certificate chains exchanged, respectively received, reducing energy consumption and data cost. This is particularly advantageous for energy-constrained wearable devices, such as cellularly-connected wearable devices. A message flight is to be understood as a sequence of one or more packets going in one direction (i.e., client to server or server to client). The next message flight occurs when the communication changes direction (i.e., server to client or client to server).

According to a first option which may be combined with any of the above first to fifth aspects, a list of a plurality of tuples of the network addresses and the associated session tickets or identifiers may be maintained, network addresses that correspond to expired session tickets or identifiers may be purged, and remaining network addresses obtained by the address lookup may be compared with the maintained network addresses of the tuples in the stored list to identify a network node for the session resumption. Thereby, an increased chance for a shortened session resumption can be achieved, as the number of available session tickets or identifiers is increased according to the length of the maintained list.

According to a second option which can be combined with any of the above first to fifth aspects, only the last network address and the associated session ticket or identifier used for a preceding session may be maintained and it may be checked whether one of the network addresses in the list obtained from the address lookup matches with the last network address and whether the corresponding session ticket is still valid. Thereby, the proposed enhanced session resumption can be simplified by remembering (storing) the last tuple only (i.e., the last IP address and the associated session ticket). This leads to a simplified control flow and reduced storage requirements.

According to a third option which can be combined with the first or second option or any of the above first to fifth aspects, the above first option may be configured to revert to the above second option if it is determined that a time period between successive session resumptions is more than a predetermined portion of a lifetime of the session tickets or identifiers. Thereby, a tradeoff between the increased chance for a shortened session resumption and the simplified control flow and reduced storage requirements can be achieved in cases where the probability of a valid session ticket or identifier becomes too low for preceding sessions older than one time period. According to a fourth option which can be combined with any of the first to third options or any of the above first to fifth aspects, network addresses that relate to non-expired session tickets or identifiers may be conditionally purged in order to save storage space.

According to a fifth option which can be combined with any of the first to fourth options or any of the above first to fifth aspects, the target network service may be a load-balanced network service, in particular a load-balanced cloud service. Thereby, the chance for a shortened session resumption can be increased for network services provided by a load-balanced server farm.

According to a sixth option which can be combined with any of the first to fifth options or any of the above first to fifth aspects, the session resumption may be performed according to a transport layer security (TLS) protocol. Thereby, the shortened session resumption options provided by the TLS protocol can be improved for load-balanced network services.

According to a seventh option which can be combined with any of the first to sixth options or any of the above first to fifth aspects, the communication session may be used for data ingest for a cloud service. This provides the advantage that efficiency of data upload by client devices with sleeping phases can be improved due to the availability of shortened session resumption procedures.

According to an eighth option which can be combined with any of the first to seventh options or any of the above first to fifth aspects, the communication module of the second aspect may comprise a modem configured to provide an attention (AT) command interface for implementing an end-to-end communication stack for data ingest communication. Thus, a few AT commands may suffice for connection setup and address lookup, so that communication efficiency can be improved.

According to a ninth option which can be combined with any of the first to eighth options or any of the above first to fifth aspects, the modem may be adapted to perform the communication session with the network server via a cellular access device using a Long Term Evolution, LTE, Machine Type Communication protocol or an LTE narrowband Internet of Things protocol. Thereby, a low-power solution with low data rate and low cost can be provided.

According to a tenth option which can be combined with any of the first to ninth options or any of the above first to fifth aspects, the client device may be a wearable device-to-cloud device for uploading sensor data by directly communicating with a cloud server. Thereby, efficiency of direct sensor data upload can be achieved for load-balanced cloud services.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the communication module of claim 8, the client device of claim 11, the method of claim 13, and the computer program product of claim 14 may have similar and/or identical embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a block diagram of a network architecture according to an embodiment;
Fig. 2 schematically shows different end-to-end communication stacks for data ingest;
Fig. 3 schematically shows a message sequence diagram including a TLS handshake;
Fig. 4 schematically shows a flow diagram of an enhanced session resumption process according to various embodiments; and
Figs. 5A to 5C schematically show diagrams with measured results of different implementations of session resumption including embodiments.

### DETAILED DESCRIPTION OF EMBODIMENTS

Embodiments of the present invention are now described based on a TLS session resumption procedure for devices (such as wearable devices or other types of IoT devices) accessing cloud services.

Wearable devices are a category of technology devices with low processing capabilities that can be worn by a user with the aim to provide information and ease of access to the master devices its pairing with. Cloud computing is a major driving force that is motivating the recent trend of wearable technology. As cloud computing continues to advance and become more convenient and usable, wearable technology is expected to grow even more popular at the office as well as at home. Wearable devices typically require continuous network access to upload information (e.g., sensor data) while energy consumption needs to be kept low through intermitting sleep modes. Similar concerns may apply to battery-powered sensors in that they need to conserve power, have more limited processing power and need to upload data to a computer (such as a server) via a network. Improvements which reduce activity which can be seen as overhead (i.e. not actual data collection and transfer) are highly desirable.

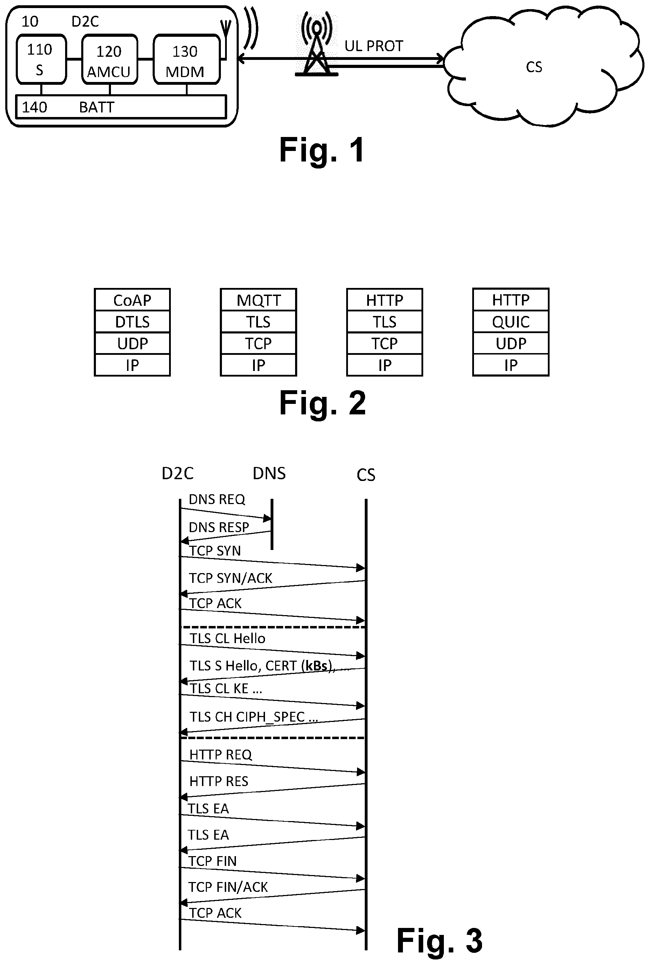

Fig. 1 schematically shows a block diagram of an architecture of a system according to a cellular embodiment. More specifically, a direct-to-cloud (D2C) device 10 (which may be a wearable device) is shown in the context of cellular communications towards a cloud service (CS) provided e.g. by the Internet.

The device 10 comprises at least one sensor 110 for sensing various parameters (e.g., health and/or physiological parameters (e.g., vital signs), environmental parameters, system control parameters, etc.) to be uploaded to the cloud service. Furthermore, the device 10 comprises a power supply unit (BATT) 140 (e.g., a battery or accumulator) for supplying energy to the other components. The measured sensor data are processed by an application microcontroller unit MCU (AMCU) 120 which may be an intelligent semiconductor integrated circuit (IC) that may consist of a processor unit, memory modules, communication interfaces and peripherals. The MCU may be programmed according to a specific application required for processing the measured sensor data for communication with the cloud service via a modem circuit (MDM) 130 (e.g., an LTE-M or a NB-IoT modem). The modem circuit 130 may communicate with the cloud service via an access device (e.g., base station or eNodeB) of a cellular network according to an upload protocol (UL PROT) for uploading the processed sensor data.

LTE-M is the simplified industry term for the Long Term Evolution Machine Type Communication (LTE-MTC) low power wide area (LPWA) technology standard published by 3GPP in the Release 13 specification. It specifically refers to LTE category M1 (CatM1) suitable for the IoT environment. LTE-M is a low power wide area technology which supports IoT through lower device complexity and provides extended coverage, while allowing the reuse of the LTE installed base. This allows battery lifetime as long as 10 years or more for a wide range of use cases, with the modem costs reduced to 20-25% of conventional modems.

LTE narrowband IoT (NB-IoT) is part of the LTE specification and has been designed to offer a low power solution with a low data rate and low cost which is ideal for IoT solutions. The NB IoT specification is also scheduled for 3GPP release 13 and provides another MTC standard with even lower complexity (but also lower bandwidth) than LTE-M. Part of the 5G specification includes enhanced machine type communication (eMTC) which will link to the NB IoT and category M LTE standards and form the basis for the future MTC of the 5G network.

More specifically, the modem 130 may be a module that provides a so-called attention (AT) command interface. This may be a high-level AT interface, implementing complete stacks such as the ones described in connection with Fig. 2 below. This means that a few AT commands may suffice, for example, to complete an HTTPS transaction, including setting up the underlying TLS and TCP connections, as well as performing the DNS lookup. Alternatively, such stacks could be implemented on the application MCU 120, but this may involve more development effort.

As an implementation example of the D2C device 10, a wearable D2C vital-signs monitoring device is proposed. The D2C device 10 may connect "directly" to the cloud service via the cellular network, without the need for any type of gateway or routing device, like a mobile phone or a Wi-Fi or broadband infrastructure. This enables reliable, anytime, anywhere, out-of-the-box connectivity. In particular, it avoids all the hassle of having to pair or onboard devices to e.g., Bluetooth or Wi-Fi networks. This, in turn, may help enable transitional care scenarios, such as hospital-to-home.

D2C may imply that the wearable device 10 itself communicates directly with cloud service, such as AWS. AWS and other cloud providers use standard, mostly IETF, communication protocols.

Fig. 2 shows an overview of various end-to-end communication stacks for data ingest communication with cloud services or other network services. The communication stacks are four examples of protocol combinations that can be used by the D2C wearable device 10 of Fig. 1 to communicate sensor data to the cloud service.

The communication stack starts with the general IP layer as a basic requirement for communication via the Internet. TCP or UDP can be used for communicating data. TCP is a connectionoriented protocol, whereas UDP is a connectionless protocol. A difference between TCP and UDP is speed, as TCP is comparatively slower than UDP. Overall, UDP is a much faster, simpler, and efficient protocol. However, retransmission of lost data packets and order preservation are only supported by TCP.

In particular, the D2C device 10 can communicate with the cloud service (e.g., AWS) by means of Hypertext Transfer Protocol Secure (HTTPS) which corresponds to the HTTP/TLS/TCP/IP stack of Fig. 2 and/or by means of open authorization (OAuth). OAuth is designed specifically to work with HTTP and essentially allows access tokens to be issued to third-party clients by an authorization server, with the approval of the resource owner. The third party then uses the access token to access the protected resources hosted by the resource server.

Alternatively, communication can be achieved by means of Message Queue Telemetry Transport (MQTT) which is a lightweight, publish-subscribe, machine-to-machine network protocol designed for connections with remote locations that have devices with resource constraints or limited network bandwidth. This corresponds to the MQTT/TLS/TCP/IP stack of Fig. 2.

Furthermore, lighter weight cloud-ingest protocols such as constrained application protocol (CoAP) over datagram transport layer security (DTLS), which corresponds to the CoAP/DTLS/UDP/IP stack of Fig. 2, as well as recent developments in IETF (such as Quick User Datagram Protocol (UDP) Internet Connections (QUIC)), which corresponds to the HTTP/QUIC/UDP/IP stack of Fig. 2, could also be used.

The TLS protocol (as described e.g. in RFC5246 (2008) or in RFC8446 (2018)) provides end-to-end security for TCP data transport. In particular, it safeguards confidentiality, integrity, and it provides server authentication which are necessary for communication of sensitive personal data such as vital signs or other sensible measurement parameters. The DTLS protocol (as described e.g. in RFC6347 (2012) or in draft-ietf-tls-dtls13-43 (2021)) does the same for UDP data transport. The QUIC protocol encompasses the functionality of TLS version 1.3 (as described e.g. in RFC8446 (2018)) by providing reliability, order preservation, and secure transport on top of UDP.

Therefore, wherever "TLS" is mentioned in the remainder of this disclosure, also DTLS or the applicable elements of QUIC are implied.

In Fig. 3, a message (flight) sequence diagram is depicted to illustrate the overhead incurred for the exemplary HTTPS (HTTP/TLS/TCP/IP) stack of Fig. 2 during communication between the D2C device (e.g., device 10 of Fig. 1), a DNS server and a cloud server that offers a cloud service (CS). In the message sequence diagram of Fig. 3, time proceeds from the top to the bottom of Fig. 3 and a TLS handshake is included between the dotted horizontal lines.

To send a limited sequence of vital-signs data securely and reliably (for example, 100 bytes in length) some fifteen message flights are involved, and several kilobytes of data may have to be transported. Particularly, server authentication is achieved by downloading a chain of certificates, which may comprise several kilobytes of data.

The communication procedure of Fig. 3 starts with a DNS lookup where the D2C device tries to resolve the domain name for a desired cloud service request by sending a DNS request (DNS REQ) to the DNS server which responds with a DNS response (DNS RESP) including the IP address of the cloud server offering the desired cloud service.

In the subsequent connect phase, the D2C device (client) establishes a TCP connection with the received IP address of the cloud server by sending a synchronization packet (TCP SYN). The cloud server acknowledges the synchronization packet by responding with an acknowledgement packet (TCP SYN/ACK). The D2C device answers with an acknowledgement packet (TCP ACK) to thereby conclude the three-way TCP connection establishment.

Next, for TLS version 1.2 (as described e.g. in RFC5246 (2008)), a TLS handshake procedure starts, which involves four message flights (exchanges), i.e., a four-way handshake. The first two messages (TLS Client Hello (TLS CL Hello) and TLS Server Hello (TLS S Hello)) are needed for the endpoints (D2C device and cloud server) to agree on a cipher suite and for the cloud server to authenticate itself to the client by means of the above-mentioned certificate chain. The latter two flights (TLS Client Key Exchange (TLS CL KE) and TLS Change Cipher Spec (TLS CH CIPH SPEC)) are needed to establish shared session keys, enabling encrypted communications (for confidentiality and integrity) during the subsequent message exchanges (and in the case of Fig. 1, the vital-signs or other sensor data upload in particular).

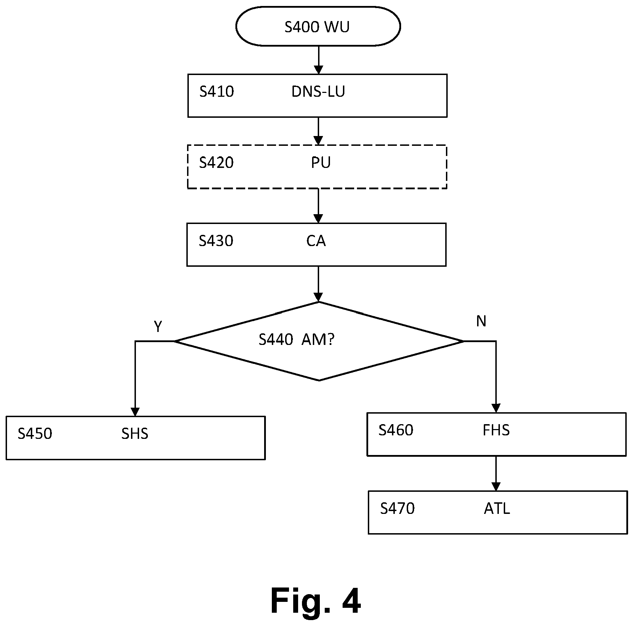

Once a secure connection has been established, one or more message exchanges can take place. Each message exchange (only one is depicted in Fig. 4) includes a send phase where the D2C device sends a HTTP request (HTTP REQ) to the cloud server. Then, in a subsequent wait phase, the D2C device waits for the cloud server to respond to the request. During the wait phase, the cloud server processes the HTTP request, finds the resource (desired cloud service), and sends a HTTP response (HTTP RES) to the D2C device which loads the content in a load phase.

Once the necessary message exchanges have taken place, the connection can be torn down (e.g., before the client device goes to sleep). In Fig. 3, an exemplary sequence of five message flights is shown that results in teardown of the connection at both TLS and TCP layer. The first two message flights in this example are TLS Encrypted Alert (TLS EA). They may be followed by two further message flights (TCP FIN, TCP FIN/ACK) for closing the connection (no more data) and a final TCP acknowledgement (TCP ACK). In practice, also other message sequences may take place having the same effect of tearing down the connection.

Session resumption can be used to reduce the above four-way TLS handshake to a two-way handshake and at the same time avoid the downloading of certificates. It does so by reusing negotiated session data, including session keys, from a previous session.

For TLS version 1.2, this can be achieved by session resumption with session identifiers (session IDs) or by session resumption with session tickets (as described e.g. in RFC5077 (2008)). In the former case, both server and client keep record of the session data (the session ID being a unique index to that data), whereas in the latter case the server packages the session data in an encrypted data block (key known only to server), the so-called session ticket, and transfers it to the client. Thus, in the latter case, no session data is left at the server. When the client wants to resume an earlier session, it has to present the session ticket to the server again.

As session tickets avoid keeping state at the server side, they are more scalable from a cloud provider's or other service provider's point of view. In order to manage its storage resources, a cloud server or other network server may choose to purge session data associated with a session ID within a relatively short span of time (e.g., 10 min), rendering the session ID invalid. Consequently, session tickets may have a significantly longer lifetime than session ID's (e.g., 12 h vs. 10 min), making them better suited for wearable devices that wake up once every few hours.

TLS version 1.3 (as described e.g. in RFC8446 (2018)) reduces the four-way handshake for the initial session creation to a two-way handshake and supports similar mechanisms for session resumption. Also, in this case, the downloading of the certificate chain is avoided and, optionally, the handshake can even be reduced to having no message flights at all. That option is known as 0-RTT (RTT = Round Trip Time). While, technically, there will still be a two-way handshake for 0-RTT, data traffic for that handshake may be piggybacked on other messages. Consequently, no message flights are needed in addition.

Thus, TLS can provide for performing a reduced handshaking to save on protocol overhead by reusing previously exchanged keys. As an example, TLS session resumption may reduce the number of message flights by two and may reduce payload size by as much as 50%, by avoiding downloading the same certificate chain over and over again.

However, many cloud services or other network services use multiple server nodes with load-balancing and may therefore be unable to handle TLS session resumption themselves. The consequence is that when a device is switched to a different node upon session resumption, the device and new server are obliged to complete the full handshake protocol.

Therefore, TLS session resumption may not be very effective in combination with load-balanced network services (e.g., cloud services). As described above, many network services (such as cloud services) use multiple server nodes with load-balancing where a device may be switched between nodes over time and between connections. Such server configurations are often unable to handle TLS session resumption themselves. The consequence is that when a device is switched to a different node upon resumption, the device and new server are obliged to complete the full handshake protocol.

The Open Systems Interconnection (OSI) model describes seven layers that computer systems use to communicate over a network. The seven layers are the physical layer (layer 1, used e.g. for electrically or optically transmitting raw unstructured data bits across the network), the data link layer (layer 2, used e.g. for managing node-to-node data transfer where data is packaged into frames), the network layer (layer 3, used e.g. for receiving frames from the data link layer, and delivering them to their intended destinations based on the addresses contained inside the frame), the transport layer (layer 4, used e.g. for managing delivery and error checking of data packets), the session layer (layer 5, used e.g. for controlling conversations between different nodes, including authentication and reconnections), the presentation layer (layer 6, used e.g. for formatting or translating data for the application layer based on syntax or semantics that the application accepts), and the application layer (layer 7, used e.g. for identifying communication partners and resource availability, and for synchronizing communication between end users and/or a software applications).

According to Amazon® (2021): "What is Elastic Load Balancing?", (retrievable from https://docs.aws.Amazon.com/elasticloadbalancing/latest/userguide/what-is-load-balancing.html), Amazon® Web Services (AWS) offers three different types of load balancers called Classical Load Balancers (CLB) which operate at OSI layers 4 and 7 and where the Internet Protocol (IP) address changes over time, Application Load Balancers (ALB) which operate at OSI layer 7 and where the IP address changes over time, and Network Load Balancers (NLB) which operate at OSI layer 4 and where the IP address remains the same.

To reduce time and network traffic spent in an initial handshake procedure, a client can request session resumption from a server that previously shared a session with the client. Thereby, the handshake procedure can be shortened. In order to support session resumption, the server can either store the session security parameters in a local database or use session tickets to delegate storage to the client.

The type of, and extent to which, session resumption is supported (e.g., by AWS) depends on the type of load balancer deployed. Further details can be derived e.g. from Amazon® (2020): "Do Classic Load Balancers, Application Load Balancers, and Network Load Balancers support SSL/TLS session resumption?" (retrievable from https://aws.Amazon.com/premiumsupport/knowledge-center/elb-ssl-tls-session-resumption-support/).

According to an example, CLBs support session ID-based session resumption but don't support session ticket-based session resumption. Session caching is supported at the node level. This means that if a client connects to a second node (B) using the session ID received from a first node (A), then the handshake reverts to a full handshake. After that, a new session ID is generated by the second node (B).

According to another example, ALBs support both session ID and session ticket-based session resumption. Both session IDs and session tickets are supported at the node level. This means that if a client connects to the second node (B) using the session ID or session ticket received from the first node (A), then the handshake reverts to a full handshake. After that, a new Secure Sockets Layer (SSL) session ID and session ticket are generated by the second node (B).

According to a further example, NLBs support only session tickets for session resumption. Resumption using session tickets is supported at the regional level. Clients can resume transmit layer security (TLS) sessions with an NLB using any of its IP addresses.

This means that getting session resumption to work across nodes is not possible for CLB and ALB. For NLB it is, but not all cloud or other network service deployments use NLB.

As an example, when performing a DNS lookup on a load-balanced non-NLB endpoint, a list of IP addresses may be returned. A client typically choses the first IP address from this list, but this is not mandatory. As the time-to-live (TTL) for this lookup tends to be small (e.g., 60s), a new DNS lookup has to be performed each time the client wakes up and this may result in a different list of IP addresses.

Energy consumption and data communication cost are important criteria for cellular or other network devices, in particular for small form factor wearable ones or other IoT devices. Therefore, minimizing the amount of data communicated is an important design consideration. For non-cellular devices, such as Wi-Fi or other wired or wireless network devices, energy consumption may still bear relevance.

Standard protocols for data ingest (i.e., obtaining and importing data) for cloud services incur significant overhead in terms of the number of message (flights) exchanged, as well as in terms of payload. This is particularly true, if the net amount of data to be uploaded as part of a single transaction is relatively small (e.g., just a hundred bytes of vital signs) and if the period in between transactions is long (e.g., 2 hour), such that the cellular communication modem needs to go into sleep mode to save energy. The latter may be relevant because this causes connections at different layers in the stack (e.g., Transmit Control Protocol (TCP), TLS, etc.) to be discontinued, necessitating to set them up from scratch again for the next transaction.

Fig. 4 schematically shows a flow diagram of an enhanced session resumption procedure according to various embodiments for load-balanced network services, which may be executed by the application MCU 120 of Fig. 1.

In step S400, the procedure is triggered by a wake-up action (WU) of the client device (e.g., the wearable D2C device 10 of Fig. 1).

The procedure (or the processing MCU) is configured to maintain a list of tuples (IP address, session ticket) across iterations of session starts and/or resumptions. Initially the list is empty. Each iteration starts with the modem (e.g., modem 130 in Fig. 1) waking up from sleep (i.e., some state in which it is not communicating with the server and generally consumes less energy) to initiate communications. As mentioned before, the time between iterations can be long, for example, several hours.

After wake-up from sleep in step S400, a DNS lookup (DNS-LU) of a cloud service is performed in step S410 to obtain from the DNS server a list of valid IP addresses.

Then, in an optional step S420, entries with expired session tickets, as obtained from the stored and maintained (IP address, session ticket) tuple list are purged (PU).

Then, in step S430, the remaining IP addresses obtained by the DNS lookup in step S410 are compared (CA) with the IP addresses of the tuples in the stored list.

If an address match (AM) is determined in subsequent step S440 (i.e., at least one of the IP addresses of the DNS lookup matches with an IP address of one of the tuples in the list), then the procedure branches to step S450 where a shortened handshake (SHS) is performed towards that IP address, using the stored session ticket of the corresponding tuple of the matching IP address.

Otherwise, if no address match is determined in step S440, the procedure branches to step S460 where a new full handshake (FHS) with an arbitrary IP address from the DNS lookup is started. Then, in step S470, this arbitrarily selected IP address and a new session ticket obtained from full handshake are added (ATL) as a new tuple to the maintained tuple list.

The DNS lookup in step S410 could be avoided or skipped, if the previous DNS lookup did not expire yet, that is, if it is still within the TTL duration. In that case, the previous IP address can simply be re-used for the session resumption. However, for the exemplary scenario of Fig. 1 with the wearable D2C device 10 or similar scenarios, the time between iterations (e.g., 2 h) is much longer than the TTL (e.g., 60 s).

Furthermore, session tickets may have a time-limited validity (lifetime). This information is encoded in the ticket itself (e.g., as used in step S420). However, this lifetime should not be confused with the DNS TTL duration mentioned above.

One of the benefits of the present embodiments is that they can be implemented exclusively on the client side while no changes are needed on the server side (e.g., cloud side). Thus, the proposed shortened or accelerated session resumption does not need any modification on the network/server side.

As an example, the proposed shortened or accelerated session resumption of the embodiments described herein can be implemented in a client device (e.g., the D2C device 10 of Fig. 1) e.g. by adapting the device firmware to implement the procedure (e.g., algorithm) described above in connection with Fig. 4. More specifically, two distinctly different deployment scenarios can be envisaged. In a first example, implementation can be achieved as part of a device application code on a host processor (e.g., the application MCU 120 of Fig. 1). In a second example, implementation can be achieved as part of the firmware of a wired or wireless (e.g., cellular, WiFi, etc.) modem (e.g., the modem 130 of Fig. 1).

According to an alternative embodiment, the procedure of Fig. 4 could be modified (simplified) by remembering (storing) the last tuple only (i.e., the last IP address and the associated session ticket). This leads to a simplified control flow and reduced storage requirements.

Thus, after wake-up from sleep in step S400, a DNS lookup is initiated in step S410 to obtain a list of valid IP addresses. Then, step S420 is skipped (not required) and the IP addresses of the obtained list are directly compared in a modified step S430 with the last IP address used for the preceding session.

Then, it is checked in a modified step S440, whether one of the IP addresses in the list obtained from the DNS lookup matches with the IP address used for preceding session (preceding iteration) and whether the corresponding session ticket is still valid. If an address match is determined and the session ticket is still valid, the procedure branches to step S450 where a shortened handshake is performed in step S450 towards that matching IP address using the related session ticket of the stored tuple.

Otherwise, if no address match is determined or if the session ticket is no longer valid, the procedure branches to step S460 where a new full handshake is started with an arbitrary IP address selected from the DNS lookup. Then, the selected IP address and the associated session ticket are stored in step S470 as the new tuple of the preceding session.

It should be noted that the embodiment of Fig. 4 may be configured to revert to the alternative (simplified) embodiment if the period in between the uploads (session resumptions) is more than a predetermined portion (e.g., 50%) of the lifetime of the session tickets.

As an example, in case where it is known beforehand that a client device's upload period will be more than half a session ticket's lifetime, a procedure according to the alternative simplified embodiment can be activated, rather than one according to the enhanced embodiment of Fig. 4. In a case where the upload period is a fixed given period, this could be decided at design time or during set-up of the client device. Otherwise, if a client device has multiple modes of operation (e.g., a D2C vital-signs monitoring device has a much higher upload frequency while the patient is still at the hospital than when then patient returns home from the hospital), it can be reconfigured for another upload period and upon such reconfiguration it could also be reconfigured to either use the procedure of the simplified embodiment or the procedure of the enhanced embodiment.

In an example, 8-hourly uploads and tickets with a 12 hour lifetime may be used in a client device. Then, upon wake-up, an 8 hour old ticket (that will expire in 4 hour) may be stored, that does not match with any of the addresses of the DNS lookup. Thus, a full handshake would be needed to create a new, second ticket. In this case, the enhanced embodiment of Fig. 4 would store two tickets (of which the 8 hour old one would not be useful for the next iteration), whereas the simplified embodiment would only save the newest one. In other words, less storage space would be required by switching to the simplified embodiment.

In another modification, the embodiment of Fig. 4 may be configured to also purge tuple(s) for session tickets that are still valid in order to save storage. This could either occur in step S420 e.g., by (conditionally) purging the tuple with the first to expire ticket (e.g., in case there are no other tuples to purge) or in step S470 when the storage is full and oldest tuples shall be replaced with new ones.

Each of the embodiments described herein can be implemented using session IDs instead of session tickets. It should however be considered that session IDs may have shorter lifetimes.

In order to evaluate the effectiveness of both aforementioned embodiments described in connection with Fig. 4 relative to the conventional session resumption procedures, a simulation of the scenario of a wearable D2C device uploading some vital signs towards a load-balanced cloud service once every two hours has been performed.

For this experiment, DNS requests were sent to a DNS server, in order to resolve the fully-qualified domain name associated with an application programming interface (API) gateway service hosted by AWS, once every two hours. An API gateway is a server which provides a single entry point into a system via an API that is tailored to each client. The lists of IP addresses returned by the corresponding DNS responses were noted. Subsequently, different candidate algorithms of the above embodiments and a conventional session resumption were simulated, using these sequences of IP address lists as input, and the number of sessions that would have been resumed were counted. In particular, the algorithms for each of the abovementioned embodiments of Fig. 4 were compared to a straightforward ("naive") conventional session resumption procedure based on the latest session ticket.

It should be noted that the used API gateway service supports session tickets at node level and that these session tickets have a validity of 12 hours. The latter parameter was taken into account when evaluating the embodiments. That is, a session ticket of at most 5 iterations ago could still be used for successful session resumption (5 × 2 hour < 12 hour).

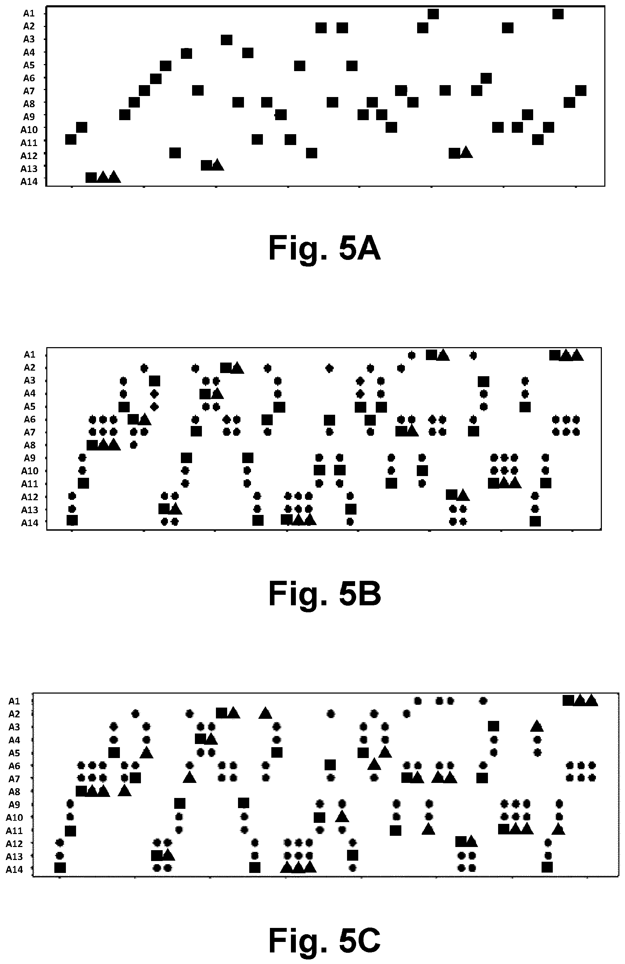

Figs. 5A to 5C schematically show diagrams with measured results of the simulation for different implementations of session resumption including the naive session resumption (Fig. 5A) and above two embodiments (Figs. 5B and 5C). The horizontal axis of the diagrams shows fifty consecutive iterations of the experiment. The vertical axis shows fourteen different IP addresses A1 to A14 of different nodes of the cloud service, as they that were observed in any of the DNS responses. Successfully resumed sessions are indicated by black triangles. Furthermore, black squares are used to indicate an address selected for a full handshake. Such addresses were selected to set up a connection for which no valid session ticket existed (i.e., for which a full handshake had to be performed), whereas the black triangles indicate addresses that were selected and for which successful session resumption was possible (and hence for which a shortened handshake could be performed). The black dots are the remaining addresses, i.e., those addresses that were returned by the DNS lookup but that were not selected for setting up any connection.

Fig. 5A shows the results for the naive (conventional) implementation such as the above TLS session resumption. Each time the first IP address from the list as returned by the DNS response is noted. If that IP address is equal to the IP address noted for the preceding iteration, a resumed session is counted and marked as a black triangle in the row of the related node. As can be gathered from the diagram of Fig. 5A, only in 4 out of 50 iterations, session resumption would be successful. In other words, an effectiveness of 8% can be achieved. Note, by the way, that no single IP address was used more than five times in a row (i.e., the session ticket would thus still have been valid).

Fig. 5B shows the results for the simplified (alternative) embodiment of Fig. 4 (without step S420) as described above. Here, in 15 out of the 50 iterations, session resumption would be successful. In other words, an effectiveness of 30% can be achieved.

Fig. 5C shows the results for the embodiment of Fig. 4 as described above. Here, in 26 out of the 50 iterations, session resumption would be successful. In other words, an effectiveness of 52% can be achieved.

The table below presents an overview of effectiveness of different options as measured in the experiment. It compares the two embodiments of Fig. 4 with the naive implementation and also with the options of no session resumption at all, and full-fledged session resumption across nodes (i.e., using NLB). Note that for session resumption across nodes, the 12-h validity of the session tickets implies that still for 1 out of 6 cases a full handshake will be needed. Therefore, the effectiveness becomes 83%.

| Algorithm | Effectiveness (% resumed handshakes) |
|---|---|
| No session resumption | 0% |
| Node-based session resumption without IP address selection (naive implementation) | 8% |
| Node-based session resumption preferring previous IP address (simplified embodiment) | 30% |
| Node-based session resumption selecting IP address from list (preferred embodiment) | 52% |
| Session resumption across nodes | 83% |

Session resumption across nodes can be achieved by configuring a cloud service supporting this, such as the initially described NLB. This requires adaptations on the server side (e.g., cloud side), which may not be possible in all scenarios, for example in scenarios where the device manufacturer doesn't have control over the server side or chooses not to adapt it for other reasons.

Apparently, the above experimental results are very specific to the battery-powered sensor/wearable D2C scenario, as well as to the choice and configuration of the cloud service. In particular, for any application with much more frequent uploads relative to the session ticket lifetime, the efficiency gains of the suggested embodiments may be much larger and may approach those of session resumption across nodes.

Other experiments for the D2C device indicate that energy consumption of an upload utilizing a resumed handshake is up to 33% less than one of an upload utilizing a full handshake. This means that an overall energy reduction of up to 17% (52% of 33%) in cellular communications could be achieved for the full embodiment of Fig. 4. In scenarios where overhead of connecting to the network (cellular, Wi-Fi, or otherwise) would be less, the relative gains in energy expenditure may be larger. The experiments involved a modem being switched off between uploads, which means that, each time, it needs to reattach to the cellular network before IP communications become possible, lowering the relative gains of any optimizations at IP level. This means that an embodiment that brings the modem to a smarter sleep mode - called PSM - could show higher relative gains.

The relative gains in terms of data transported over the cellular network, and hence the associated data cost, could be as high as a factor two. That is, in one example of an upload of a data amount of 100 B vital signs, some 3 kB of certificates were downloaded as part of a data exchange at IP-level of some 6 kB in total.

The relative improvements for energy consumption and data amount would be larger for future protocols requiring fewer handshakes (e.g., TLS 1.3, QUIC).

As mentioned above, the procedures/algorithms of the above embodiments can be implemented in a modem module (e.g., the modem 130 of Fig. 1) or in an application MCU (e.g., the application MCU 120 of Fig. 1) of a client device. In the first case of modem implementation, the modem module could be used in various different client devices independent from the application MCU.

Alternatively, embodiments could be used as an exclusive feature of specific client devices to enable longer battery life (or lower battery cost / form factor) as well as lower expenditure on cellular communications. In this case, the algorithm can be implemented on the application MCU instead.

To summarize, a method and apparatus have been described for increasing the likelihood of a device or application being able to resume a previously established session (e.g., a transport layer security session) with a load-balanced network service (e.g., a cloud service) which may only support load balancing at node level. This can be achieved by maintaining one or more network addresses and valid session tickets (or identifiers) of individual nodes (e.g., servers) of the network service, that were used for previous communication sessions and by selecting a particular node for a subsequent communication session from a list of potential nodes returned by an address lookup (e.g., a domain name system (DNS) lookup), based on its match with one of the one or more network addresses and session tickets or identifiers.

While the invention has been illustrated and described in detail in the drawings and foregoing description, such illustration and description are to be considered illustrative or exemplary and not restrictive. It should be understood that embodiments may be combined and that features of any one of the embodiments may be used in combination with another embodiment. The invention is not limited to the disclosed embodiments. The invention may apply for example to any type of biosensor for measuring heart and/or respiratory rates or other physiological parameters by directly linking the biosensor to a clinical information system without the patient requiring any hub or mobile phone. It is also applicable to other small-form-factor (i.e., comfortably wearable), energy-constrained devices by enabling long battery life (e.g., cellular or Wi-Fi). Additionally, it may be applied to help reducing data communication cost for any type of cellular IoT device that sends (small amounts of) application data, such as automated external defibrillators (AED's) and respiratory equipment.

However, the suggested accelerated or shortened session resumption concept has wider applicability. Basically, any energy-constrained wired or wireless device that connects directly to a cloud service, using standard (secure and reliable) IP protocols could benefit, at least if the application payload is small relative to the protocol overhead.

Moreover, the proposed improvements for session resumption can be implemented in all types of wired or wireless networks, e.g., it can be applied to devices or applications communicating using cellular wireless communication standards, specifically the 3^{rd} Generation Partnership Project (3GPP) 5G and New Radio (NR) specifications. The communication devices or applications can be different types of devices, e.g., mobile phones, smart watches, smart tags for location tracking and logistics, commissioning devices, applications or tools, vehicles (for vehicle-to-vehicle (V2V) communication or more general vehicle-to-everything (V2X) communication), V2X devices, IoT devices, including low-power medical sensors for health monitoring, medical (emergency) diagnosis and treatment devices, for hospital use or first-responder use, virtual reality (VR) headsets, etc., and may be used e.g. in personal IoT networks (PIN) and/or ProSe with focus on UE-to-UE.

Furthermore, the proposed improvements for session resumption can be used in applications such as Wi-Fi, cloud access, browser synchronization, e-passports, in the thread network protocol for IoT devices, in standards developed by standard developing organizations (SDOs) such as IEEE, ISO/IEC, or IETF, in IEEE 802.11s protocols and WiFi protected access (e.g., WPA3 e.g. in connection with Simultaneous Authentication of Equals (SAE)), in protocols for transport layer security (e.g., TLS 1.3) or internet key exchange (e.g., IKEv2).

Additionally, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a data stream of a certain average data rate, for example video, ultrasound, X-Ray, Computed Tomography (CT) imaging devices, real-time patient sensors, audio or voice or video streaming devices used by medical staff, in general IoT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

A single unit or device may fulfill the functions of several items recited in the claims. The mere fact that certain measures are recited in mutually different dependent claims does not indicate that a combination of these measures cannot be used to advantage.

The described operations like those indicated in Fig. 4 can be implemented as program code means of a computer program and/or as dedicated hardware of a D2C device or another client device. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for controlling initiation of a communication session between a client device (10) and a network node, wherein the apparatus is adapted to:
maintain (S470) one or more network addresses and associated session tickets or session identifiers of individual network nodes that provide a target network service (CS) and that were used by the client device (10) for previous communication sessions;
select (S430, S440) a network node for a subsequent communication session from a list of potential nodes returned by an address lookup (S410) based on a match of its network address with one of the one or more network addresses and associated session tickets or identifiers; and
use the matched network address and associated session ticket or identifier for a session resumption (S450) with the selected network node.

2. The apparatus of claim 1, wherein the apparatus is adapted to maintain a list of a plurality of tuples of the network addresses and the associated session tickets or identifiers, to purge (S420) network addresses that relate to expired session tickets or identifiers, and to compare (S430) remaining network addresses obtained by the address lookup (S410) with the maintained network addresses of the tuples in the stored list to identify (S440) a network node for the session resumption (S450).

3. The apparatus of claim 1, wherein the apparatus is adapted to maintain (S470) only the last network address and the associated session ticket or identifier used for a preceding session and to check (S430, S440) whether one of the network addresses in the list obtained from the address lookup (S410) matches with the last network address and whether the corresponding session ticket is still valid.

4. The apparatus of claim 2, wherein the apparatus is adapted to conditionally purge (S420/S470) network addresses that relate to non-expired session tickets or identifiers in order to save storage space.

5. The apparatus of any previous claim, wherein the target network service (CS) is a load-balanced network service, in particular a load-balanced cloud service.

6. The apparatus of any previous claim, wherein the apparatus is adapted to perform the session resumption according to a transport layer security protocol.

7. The apparatus of any previous claim, wherein the communication session is used for data ingest for a cloud service.

8. A communication module (130) comprising an apparatus according to claim 1.

9. The communication module of claim 8, wherein the communication module comprises a modem (130) configured to provide an attention command interface for implementing an end-to-end communication stack for data ingest communication.

10. The communication module of claim 8 or 9, wherein the modem (130) is adapted to perform the communication session with the network server via a cellular access device using a Long Term Evolution, LTE, Machine Type Communication protocol or an LTE narrowband Internet of Things protocol.

11. A client device (10) comprising an apparatus according to claim 1.

12. The client device (10) of claim 11, wherein the client device (10) is a wearable device-to-cloud device for uploading sensor data by directly communicating with a cloud server.

13. A method of controlling initiation of a communication session between a client device (10) and a network node, wherein the method comprises:
maintaining (S470) one or more network addresses and associated session tickets or session identifiers of individual network nodes that provide a target network service (CS) and that were used for previous communication sessions;
selecting (S430, S440) a network node for a subsequent communication session from a list of potential nodes returned by an address lookup (S410) based on a match of its network address with one of the one or more network addresses and associated session tickets or identifiers; and
using the matched network address and associated session ticket or identifier for a session resumption (S450) with the selected network node.

14. A computer program product comprising code means for producing the steps of claim 13 when run on a computer device.
